# EUROPÄISCHE PATENTSCHRIFT

(11) **EP 0 812 720 B1**
(45) Veröffentlichungstag und Bekanntmachung des Hinweises auf die Patenterteilung: **19.12.2001**
(21) Anmeldenummer: 97109275.4
(22) Anmeldetag: 09.06.1997
(51) Int. Cl.: B60L 11/14, B60K 6/02, B60K 17/14

(54) **Fahrzeug mit Elektroantrieb**
Vehicle with electric drive
Véhicule avec entraînement électrique

(30) Priorität: 14.06.1996 DE 19623738
(43) Veröffentlichungstag der Anmeldung: 17.12.1997
(73) Patentinhaber: DEERE & COMPANY, Moline, Illinois 61265-8098 (US)
(72) Erfinder: Weiss, Heinz, 64625 Bensheim (DE)
(74) Vertreter: Magin, Ludwig Bernhard

(56) Entgegenhaltungen:
- DE-A- 4 108 647
- US-A- 1 951 089
- US-A- 4 319 140
- US-A- 5 067 932

## Beschreibung

Die Erfindung betrifft ein Antriebssystem für Nutzfahrzeuge, insbesondere für einen landwirtschaftlichen oder industriellen Schlepper. Das Antriebssystem enthält einen durch einen Verbrennungsmotor angetriebenen Generator und wenigstens eine Antriebsachse. Die beiden Räder der Antriebsachse werden jeweils durch einen zugehörigen, durch den Generator gespeisten Elektromotor angetrieben.

Derartige elektrische Einzelradantriebe sind beispielsweise durch die DE-A-41 08 647, die US-A-4,953,646 und die US-A-4,319,140 (Fig. 6) bekannt geworden. Sie haben den Vorteil, eine sehr individuelle Anpassung der Antriebsleistung an unterschiedliche Fahranforderungen vornehmen zu können. So ist bei Verwendung einer geeigneten Steuerung für die Elektromotoren eine stufenlose Drehzahl- bzw. Geschwindigkeitseinstellung der Räder in Vorwärts- und Rückwärtsrichtung möglich. Ferner ist der Antrieb der Räder mit unterschiedlicher Drehzahl und individuell angepaßtem Drehmoment bei Kurvenfahrt vorteilhaft, da Fahrzeugverspannungen vermieden, der Reifenverschleiß verringert und eine verbesserte Spurtreue erreicht werden können. Allerdings ist durch die Umwandlung der gesamten mechanischen Energie in elektrische Energie und zurück in mechanische Energie der Wirkungsgrad der bekannten Antriebssysteme noch nicht für alle Anwendungfälle befriedigend.

Die US-A-5,067,932 beschreibt elektrische Einzelradantriebe, bei denen in jedem Fahrzeugrad eine Einheit vorgesehen ist, die im wesentlichen aus zwei Elektromotoren und einem Differentialgetriebe besteht. Das Differentialgetriebe summiert die Ausgangsleistungen der Elektromotoren und gibt diese an das Rad ab. Um für geringe Fahrgeschwindigkeiten hohe Drehmomente zu realisieren, können die Elektromotoren bei nahezu gleichen jedoch gegenläufigen Drehzahlen betrieben werden. Damit kann jeder Elektromotor relativ schnell umlaufen und ist in der Lage, hohe Drehmomente abzugeben.

Es sind auch Fahrzeugantriebe bekannt (B.-R. Höhn und B. Pinnekamp: "Der autarke Hybrid - Ein universelles Antriebskonzept für Pkw", ATZ Automobiltechnische Zeitschrift 96 (1994), S. 294), bei denen die Räder einer Achse gemeinsam angetrieben werden. Bei einem ersten Antriebskonzept (serieller Hybrid) erfolgt der Antrieb der Achse immer nur durch einen Elektromotor, der durch eine Verbrennungsmotor-Generator-Einheit oder alternativ durch eine Fahrzeugbatterie gespeist wird. Dabei erfolgt keine Koppelung von Verbrennungsmotor und Achse. Gemäß eines zweiten Antriebskonzepts (paralleler Hybrid) wird die Achse alternativ durch den Verbrennungsmotor (und mechanischem Getriebe) oder den Elektromotor, der seine Energie aus der Fahrzeugbatterie bezieht, angetrieben. Derartige Antriebssystem können sich für Personenkraftwagen eignen, sie lösen jedoch nicht die bei Nutzfahrzeugen auftretenden Probleme hinsichtlich Wirkungsgrad, Fahrverhalten und Bereitstellung der erforderlichen Energie.

Die US-A-4,319,140 offenbart ein Antriebssystem für Fahrzeuge mit einem Verbrennungsmotor, der über ein Differential einerseits einen Generator und andererseits einen Antriebsstrang mit einer Kupplung, einer Antriebswelle, einem Schaltgetriebe, einem Achsdifferential und einer Antriebsachse mit zwei Rädern besteht. Es ist des weiteren ein Elektromotor vorgesehen, der über ein Getriebe die Antriebswelle antreibt und durch eine Fahrzeugbatterie gespeist wird, welche durch den Generator aufladbar ist. Durch den Elektromotor läßt sich das Fahrzeug unabhängig von dem Verbrennungsmotor antreiben, indem die Kupplung geöffnet und ein elektrischer Entkopplungsschalter betätigt wird. Bei dem beschriebenen Antriebssystem soll die Aufteilung der Verbrennungsmotorleistung auf die Antriebsräder und den Generator in Abhängigkeit der Belastungen der Räder bzw. des Generators möglich sein.

Es wurden ferner von Chr. Bader "Elektrische und hybride Antriebe für Nutzfahrzeuge" beschrieben (ATZ Automobiltechnische Zeitschrift 81 (1979) 6, Seite 288) , bei denen der Verbrennungsmotor sowohl ein Lastschaltgetriebe als auch einen Generator mit nachgeordnetem Elektromotor antreibt. Die Ausgangsleistungen des Lastschaltgetriebes und des Elektromotors werden in einem Summiergetriebe zusammengeführt und von diesem an eine Fahrzeugachse abgegeben, wo sie auf die einzelnen Räder verteilt wird. Ein Schwungrad mit Untersetzungsgetriebe soll dabei als Energiespeicher dienen und die Verwendung einer als Energiespeicher dienenden Batterie entbehrlich machen. Bei den für Elektrotransporter und Elektrobusse vorgeschlagenen Antrieben ist eine individuelle Drehmomenteneinstellung der einzelnen Räder der Fahrzeugachse, wie sie insbesondere bei Ackerschleppern wünschenswert wäre, nicht möglich.

Die der Erfindung zugrunde liegende Aufgabe wird darin gesehen, ein gattungsgemäßes Antriebssystem anzugeben, das die genannten Anforderungen erfüllt und die angesprochenen Probleme überwindet. Insbesondere soll das Antriebssystem einen guten Gesamtwirkungsgrad aufweisen, eine stufenlose Anpassung der Drehzahlen und/oder Drehmomente der Einzelräder an die gewünschten Fahranforderungen und eine Verbesserung des Fahrverhaltens des Fahrzeugs ermöglichen.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß weist der Verbrennungsmotor wenigstens eine mit der Antriebsachse in Verbindung stehende Antriebswelle auf. Ferner ist jedem Rad der Antriebsachse ein Summengetriebe zugeordnet, welches die mechanische Ausgangsleistungen der Antriebswelle und die Leistung des Elektromotors kombiniert und an das Rad abgibt.

In den Einzelradantrieben der Antriebsachse werden der mechanische Leistungsfluß und die Leistung des entsprechenden elektrischen Radmotors in einem Summengetriebe, beispielweise einem Planetengetriebe, zusammengefaßt. Eine derartige Überlagerung eines mechanischen mit einem elektrischen Antriebsanteil wird im folgenden als Hybridantrieb und die zugehörige Antriebsachse wird als Hybridachse bezeichnet.

Der mechanische Antrieb stellt eine Grunddrehzahl bereit, die durch eine beliebig einstellbare Drehzahl des elektrischen Zweigs überlagert wird. Durch die Steuerung der Elektromotoren ist eine stufenlose Geschwindigkeitseinstellung jedes Rades der Antriebsachse möglich. Dabei kann jeder Elektromotor in Vorwärts- oder Rückwärtsrichtung angetrieben werden, so daß das zugehörige Summengetriebe die Elektromotordrehzahl zu der Drehzahl des mechanischen Zweigs addiert oder von dieser subtrahiert. Die Einstellung der resultierenden Fahrgeschwindigkeit wird vorgenommen, indem einerseits die Drehzahl der Verbrennungskraftmaschinen sowie gegebenenfalls das Übertragungsverhältnis eines diesem nachgeordneten Schaltgetriebes und andererseits die Elektromotordrehzahl sowie gegebenenfalls das Übertragungsverhältnis des Summengetriebes und/oder eines weiteren Getriebes eingestellt werden.

Das erfindungsgemäße Antriebssystem ermöglicht eine stufenlose Steuerung und Einstellung der Drehzahlen und/oder Drehmomente der Einzelräder, d. h. es lassen sich für jedes Rad Drehzahlen vorgeben und genau einstellen. Dadurch kann eine gute Anpassung an die gewünschten Fahranforderungen erfolgen.

Es kann ferner auf ein Achsdifferential, das bei Kurvenfahrt einen Drehzahlausgleich der Räder einer Achse ermöglicht, verzichtet werden. Die Summengetriebe einer Antriebsachse können unmittelbar, oder gegebenenfalls unter Zwischenschaltung eines Umschaltgetriebes mit dem Verbrennungsmotor des Fahrzeugs in Verbindung stehen. Da die Drehzahlen aller elektrischen Einzelradantriebe von Vorder- und Hinterachse frei einstellbar sind, ergibt sich ein gutes Fahrverhalten und eine hohe Flexibilität beim Betrieb des Arbeits- oder Nutzfahrzeugs, insbesondere beim Wenden eines Ackerschleppers an den Vorgewenden, bei der Spurhaltung beim Pflügen, dem Einscheren in enge Parklücken etc..

Die Elektromotoren wirken stabilisierend auf die Raddrehzahlen sowohl beim Antrieb als auch beim Bremsen der Räder. Dadurch hält der Schlepper sehr gut seine Spur und läßt sich auch als unbemannter Roboter einsetzen, der eine vorgebbare Fahrtroute abfährt.

Um einen guten Gesamtwirkungsgrad zu erreichen, wird das Antriebssystem vorzugsweise so ausgelegt, daß der mechanische Antriebszweig den größeren Leistungsanteil überträgt.

Es kann von Vorteil sein, neben der Hybridachse eine weitere Achse mit reinen elektrischen Einzelradantrieben vorzusehen, so daß wenigstens eine weitere Antriebsachse vorliegt, deren Räder jeweils ausschließlich durch einen durch den Generator gespeisten Elektromotor angetrieben werden. Um die relativ hohe Ausgangsdrehzahlen der Elektromotoren herabzusetzen, ist diesen zweckmäßigerweise jeweils ein Untersetzungsgetriebe, insbesondere ein Planetengetriebe, nachgeordnet.

Die Ausbildung von reinen elektrischen Einzelradantrieben ist besonders für Lenkachsen vorteilhaft, da der Aufwand eines mechanischen Durchtriebs für die gelenkte Achsen groß ist. In diesem Fall ist es von Vorteil, die Vorderachse rein elektrisch anzutreiben und die Hinterachse als parallelen Hybridantrieb zu gestalten.

Hierbei dient die Hinterachse als Hauptantriebsachse und die weniger belastete Vorderachse als Hilfsantriebsachse. Da ein wesentlicher Leistungsanteil über die Hinterachse mechanisch aufgebracht wird, ergibt sich ein guter Wirkungsgrad. Die konstruktive Ausbildung der elektrisch angetriebenen Vorderachse mit ihrem Lenkmechanismus ist relativ einfach.

Zusätzlich zu der Ausbildung einer Hybridachse gemäß Anspruch 1 kann wenigstens eine zweite Antriebsachse des Nutzfahrzeugs auf konventionelle Art rein mechanisch angetrieben werden, indem sie über eine Antriebswelle und ein umschaltbares Getriebe mit dem Verbrennungsmotor verbunden ist.

Es kann auch von Vorteil sein, mehrere Hybridachsen vorzusehen, die mit dem Verbrennungsmotor jeweils über eine Antriebswelle in Verbindung stehen. Derartige Ausbildungen für beispielsweise drei- oder vierachsige Fahrzeuge mit zwei Rädern je Achse können beispielsweise bei Militärfahrzeugen Anwendung finden oder bei neuen Traktorentwicklungen zum Einsatz kommen.

Eine bevorzugte Ausgestaltung der Erfindung sieht vor, daß die wenigstens eine Hybridachse die Antriebsachse eines an das Nutzfahrzeug angehängten Geräts, beispielsweise eines Triebachsanhängers, ist. Die mechanische Leistung kann in diesem Fall über eine Zapfwelle von dem Nutz- oder Arbeitsfahrzeug auf das angehängte Gerät übertragen werden, während die von dem Generator erzeugte elektrische Energie durch entsprechende Elektrokabel und Stecker an die Elektromotoren der Antriebsachse des angehängten Geräts geleitet wird. Es ist möglich und kann von Vorteil sein, entweder das Arbeitsfahrzeug oder das angehängte Gerät oder beide mit jeweils mindestens einer Hybridachse auszurüsten. Ferner kann es auch zweckmäßig sein, wenigstens eine Antriebsachse des angehängten Geräts, beispielsweise eines Anhängers, mit elektrischen Einzelradantrieben gemäß Anspruch 2 zu versehen.

Ein bevorzugtes erfindungsgemäßes Konzept sieht vor, daß das Arbeits- oder Nutzfahrzeug einen Fahrzeugrahmen aufweist, auf dem der Verbrennungsmotor und weitere Antriebskomponenten montiert sind und der durch die Fahrzeugachsen, von denen wenigstens eine Achse eine Hybridachse ist, abgestützt wird. Mit der Abkehr von der Blockbauweise können die Komponenten nahezu beliebig am Rahmen montiert werden. Die Rahmenbauweise ermöglicht damit eine große Flexibilität. Das Getriebe kann beispielsweise in die Hinterachse integriert und gewichtsmäßig relativ leicht ausgebildet werden, so daß auch die starre Hinterachse relativ leicht baut. Anregungen für eine diesbezügliche konkrete Ausgestaltung können beispielsweise der EP-A-0 075 484 entnommen werden.

Vorzugsweise ist zwischen Verbrennungsmotor und Summengetriebe wenigstens ein Umschaltgetriebe angeordnet, welches zwischen wenigstens zwei Übertragungsverhältnissen umschaltbar ist.

Eine weitere vorteilhafte Ausgestaltung der Erfindung sieht vor, daß der Verbrennungsmotor eine Frontzapfwelle und/oder eine Heckzapfwelle unmittelbar, das heißt über einen reinen mechanischen Strang, antreibt. Damit werden die Front- und HeckZapfwelle wie bisher direkt vom Verbrennungsmotor angetrieben. Dies erspart eine häufige Energieumwandlung von mechanischer in elektrische und zurück in mechanische Energie, die eine Reduzierung der Wirkungsgrade zur Folge haben könnte.

Beispielsweise treibt bei einem landwirtschaftlichen Schlepper der Verbrennungsmotor eine vordere und eine hintere Zapfwelle an. Dabei ist vorzugsweise die hintere Zapfwelle in die Hinterachse des Schleppers integriert, während die vordere Zapfwelle, wie bisher üblich, auf dem vorderen Rahmen des Traktorchassis montiert sein kann. Eine von der Verbrennungskraftmaschine angetriebene Kardanwelle geht direkt auf die Hinterachsen und dann, gegebenenfalls unter Zwischenschaltung eines Umschaltgetriebes, auf die Zapfwelle.

Vorzugsweise wird ein für den Zapfwellenantrieb bereitgestelltes Umschaltgetriebe gleichzeitig für den Hybridantrieb genutzt. Hierfür kann in die Antriebsachse ein durch die Antriebswelle angetriebenes und zwischen wenigstens zwei unterschiedlichen Übertragungsverhältnissen umschaltbares Umschaltgetriebe integriert werden, dessen Getriebeausgang wahlweise mit den Summengetrieben der Einzelradantriebe der Antriebsachse und/oder einer Zapfwelle verbindbar ist. Durch diese Verwendung eines gemeinsamen Umschaltgetriebes für den Zapfwellenantrieb und den mechanischen Anteil des Hybridantriebs einer Achse lassen sich Getriebekomponenten einsparen.

Das genannte Umschaltgetriebe kann wahlweise für einen reinen Zapfwellenantrieb (Achsantrieb ausgeschaltet), für einen Doppelantrieb (gleichzeitig die Zapfwelle und die Hinterachse antreibend) und für reinen Hinterradantrieb (Zapfwelle ausgeschaltet) zur Anwendung kommen.

Das Umschaltgetriebe enthält wenigstens 2 Untersetzungsverhältnisse. Es können beispielsweise auch 4 Übertragungsverhältnisse sein. Diese ermöglichen unterschiedliche Zapfwellendrehzahlen, so daß sich die Heckzapfwellendrehzahl zwischen 540, 750, 1000 und 1250 U/min umschalten läßt. Andererseits stellt ein derartiges, gemeinsam genutztes Zapfwellengetriebe für den mechanischen Leistungsanteil des Hinterachsantriebs einen Gesamtsprung zur Verfügung, der größer als 2 ist.

Das Umschaltgetriebe läßt es ferner zu, daß sich beim reinen Fahrbetrieb ohne Zapfwellenbetrieb höhere mechanische Leistungsanteile auf die Hybridachse übertragen lassen (Wirkungsgradverbesserung).

Gemäß einer besonders bevorzugten Ausführungsvariante der Erfindung ist die Hinterachse hybrid und die Vorderachse mit elektrischen Einzelradantrieben ausgebildet. Die Hinterachse und die Heckzapfwelle werden bei Verwendung eines gemeinsamen Umschaltgetriebes gemeinsam durch eine Kardanwelle von dem Verbrennungsmotor angetrieben. Die Frontzapfwelle wird durch eine weitere Kardanwelle unmittelbar von dem Verbrennungsmotor angetrieben.

Vorzugsweise ist dem Summengetriebe eines Hybridantriebs ein als Planetengetriebe ausgebildetes, die Drehzahl untersetzendes Endantriebsgetriebe nachgeordnet ist. Dieses Endantriebsgetriebe weist ein hohes Drehzahluntersetzungsverhältnis auf, um die relativ hohen Antriebsdrehzahlen des Verbrennungsmotors und des Elektromotors auf die Raddrehzahlen des Nutzfahrzeugs anzupassen.

Das Summengetriebe des Hybridantriebs ist vorzugsweise ein Planetengetriebe mit einem Ravigneaux-Satz. Es kann zweckmäßig sein, das Summengetriebe so auszulegen, daß es eine Umschaltung zwischen wenigstens zwei Drehzahlübertragungverhältnissen erlaubt.

Als Elektromotoren werden vorzugsweise Asynchronmotoren eingesetzt, die preiswert in der Herstellung sind.

Vorzugsweise weist das Antriebssystem eine elektronische Steuerung auf, die Signale von Lenkwinkelsensoren zur Erfassung der Lenkwinkel der lenkbaren Räder sowie Signale von Raddrehzahlsensoren auswertet. Die Steuerung berechnet für jedes Rad aus vorgebbaren Soll- und den gemessenen Istdrehzahlen und aus errechneten Soll- und den gemessenen Istlenkwinkeln Drehzahlvorgaben aufgrund derer die Elektromotoren derart angesteuert werden, daß ein Drehzahlausgleich der durch die Elektromotoren angetriebenen Räder erfolgt.

Beispielweise stellt die Steuerung bei Geradeausfahrt die Räder des Fahrzeugs auf gleiche Drehzahlen ein und nimmt bei Kurvenfahrt eine Ansteuerung entsprechend der Fahrzeuggeometrie und in Abhängigkeit des Lenkwinkels vor, so daß beide Räder gleiche Kräfte auf den Boden übertragen (Akermann-Bedingung, siehe beispielsweise EP-B-0 553 670).

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: das Antriebsschema eines Ackerschleppers,
- Fig. 2: einen erfindungsgemäßen Einzelradhybridantrieb und
- Fig. 3: das erfindungsgemäße Antriebskonzept einer Fahrzeughinterachse.

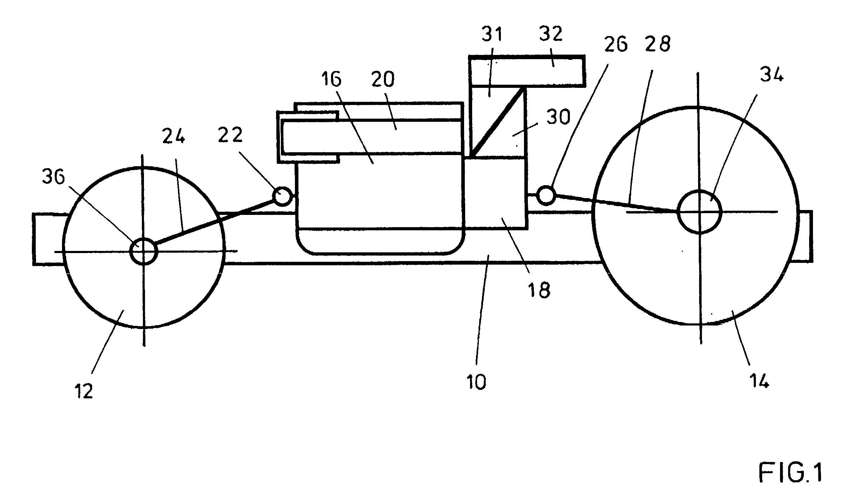

Bei dem in Fig. 1 angedeuteten Fahrzeug handelt es sich beispielsweise um einen Ackerschlepper. Das Fahrzeug weist einen Fahrzeugrahmen 10 auf, wie er beispielsweise in der EP-A-0 075 484 beschrieben oder von John-Deere-Schleppern der 6000-er Serie bekannt ist. Der Fahrzeugrahmen 10 wird von lenkbaren Vorderrädern 12 und nicht lenkbaren Hinterrädern 14 getragen. Auf dem Fahrzeugrahmen 10 ist ein Verbrennungsmotor 16 sowie ein durch den Verbrennungsmotor 16 antreibbarer Drehstromgenerator 18 montiert. Der Verbrennungsmotor 16 wird durch eine mechanisch oder auch elektronisch gesteuerte Kraftstoff-Einspritzung 20 gespeist.

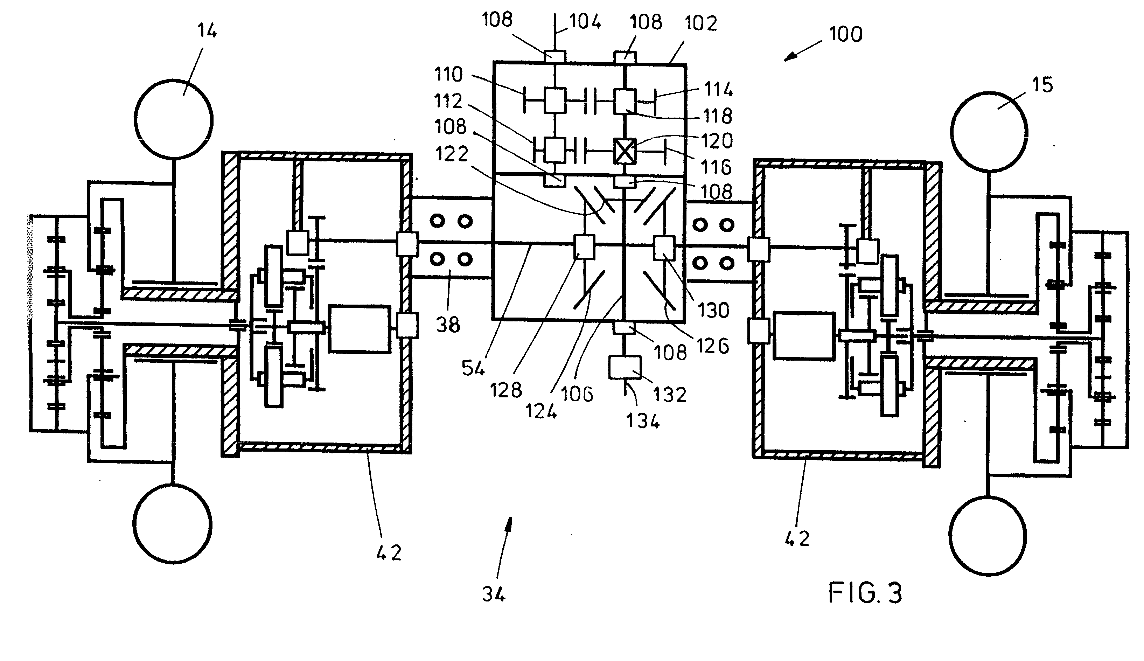

Der Verbrennungsmotor 16 treibt unter Zwischenschaltung wenigstens eines ersten Kreuzgelenks 22 eine Frontantriebswelle 24 und unter Zwischenschaltung wenigstens eines zweiten Kreuzgelenks 26 eine Heckantriebswelle 28 an. Zwischen Verbrennungsmotor 16 und den Antriebswellen 24, 28 können Getriebeteile und/oder Kupplungen angeordnet sein, was jedoch nicht näher dargestellt ist. Die Frontantriebswelle 24 dient, gegebenenfalls unter Zwischenschaltung eines nicht gezeigten Zapfwellenumschaltgetriebes und einer Zapfwellenkupplung, dem Antrieb einer nicht näher dargestellten Frontzapfwelle. Die Heckantriebswelle 28 steht, wie anhand der Fig. 3 näher erläutert werden wird, mit einem Umschaltgetriebe der Hinterachse 34 in Verbindung und liefert den mechanischen Antrieb für die Hybridantriebe der Hinterachse 34 und für die Heckzapfwelle.

Die Vorderachse 36 trägt zwei lenkbare Vorderräder 12, die jeweils durch einen zugehörigen Elektromotor angetrieben werden, was nicht näher gezeigt ist. Geeignete elektrische Einzelradantriebe sind beispielsweise aus der DE-A-41 08 647 bekannt.

Die Ausgangsleistung des Drehstromgenerators 18 wird mittels eines Gleichrichters 30 in Gleichstrom umgesetzt und mittels jedem Elektromotor zugeordnetem Wechselrichter 31 sowie elektronischer Steuereinrichtung 32 auf die Elektromotoren der Einzelradantriebe aufgeteilt.

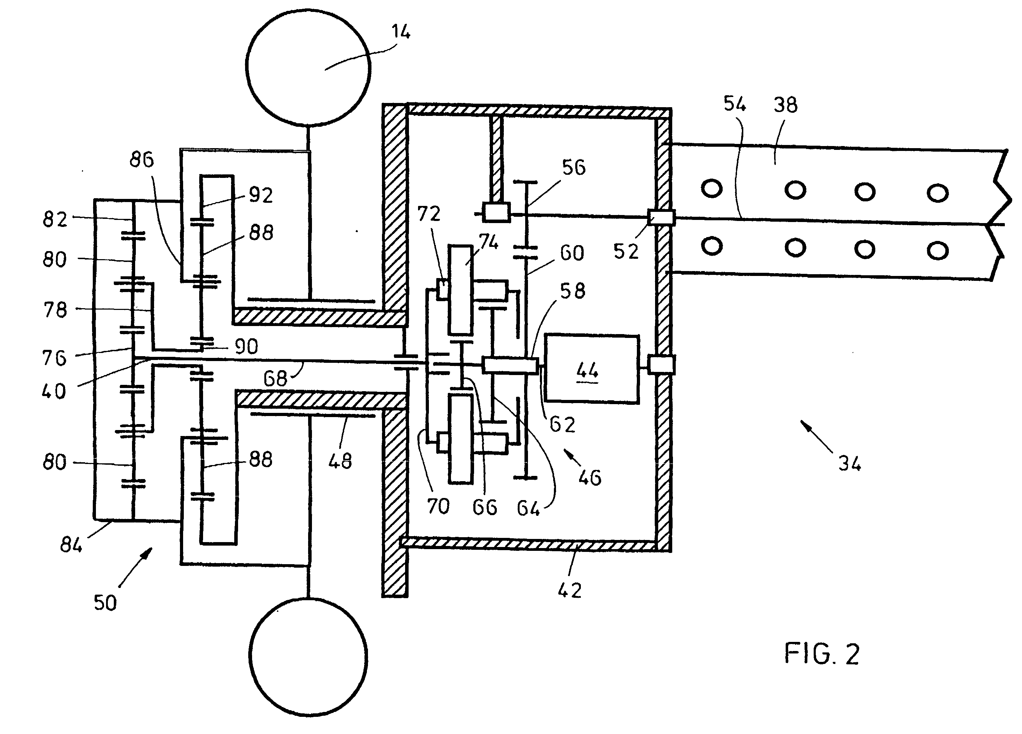

Aus Fig. 2 geht ein erfindungsgmäßer Einzelrad-Hybridantrieb für ein Hinterrad 14 der Hinterachse 34 hervor. Der Achskörper 38 der Hinterachse 34 greift radial zur Radachse 40 versetzt an einem Endantriebsgehäuse 42 an. In dem Endantriebsgehäuse 42 befindet sich ein Elektromotor 44 und ein Summengetriebe 46, das als Ravigneaux-Satz ausgebildet ist. Auf dem Endantriebsgehäuse 42 ist über ein Radlager 48 das Hinterrad 14 drehbar gelagert, welches unter Zwischenschaltung eines als Planetengetriebe ausgebildeten Endantriebgetriebes 50 von dem Summengetriebe 46 angetrieben wird.

In das Endantriebsgehäuse 42 tritt über ein Lager 52 eine Eingangswelle 54 ein, die mechanisch von dem Verbrennungsmotor 16 angetrieben wird. Ein Zahnrad 56 der Eingangswelle 54 kämmt mit einem auf einer Hohlwelle 58 befestigten Zahnrad 60. Auf der Hohlwelle 58 ist ferner ein erstes Sonnenrad 64 des Ravigneaux-Satzes 46 drehfest montiert. Die Hohlwelle 58 ist auf der Ausgangswelle 62 des Elektromotors 44, die ein zweites Sonnenrad 66 des Ravigneaux-Satzes 46 trägt, drehbar gelagert. Das freie Ende der Ausgangswelle 62 ist in einem von einer Verbindungswelle 68 getragenen Planetenträger 70 gelagert. Auf dem Planetenträger 70 sind Sätze von langen Planetenrädern 72 und von kurzen Planetenrädern 74 angeordnet. Es können beispielsweise je drei Planetenradsätze vorgesehen sein, von denen jedoch nur zwei dargestellt wurden. Die langen Planetenräder 72 kämmen mit dem ersten, größeren Sonnenrad 64, und die kurzen Planetenräder 74 kämmen mit dem zweiten, kleineren Sonnenrad 66. Ferner kämmt jedes der langen Planetenräder 72 mit einem zugehörigen kurzen Planetenrad 74.

Der Ravigneaux-Satz wirkt als Summengetriebe, in dem das über das Zahnrad 60 eingeleitete Drehmoment des mechanischen Antriebs mit dem über die Ausgangswelle 62 übertragenen Drehmoment des Elektromotors 44 entsprechend dem Durchmesserverhältnis der beiden Sonnenräder 64, 66 zusammengefaßt werden.

Die Verbindungswelle 68 dient als Eingangswelle für das Endantriebsgetriebe 50 und trägt ein Sonnenrad 76. Auf der Verbindungswelle 68 ist ein Planetenträger 78 drehbar gelagert, dessen Planetenräder 80 mit dem Sonnenrad 76 und einem Ringrad 82 kämmen. Das Ringrad 82 ist drehfest in einem Radlagergehäuse 84 angeordnet, welches drehfest das Hinterrad 14 trägt. In dem Radlagergehäuse 84 ist ein weiterer Planetenträger 86 drehfest angeordnet. Die Planetenräder 88 des weiteren Planetenträgers 86 kämmen einerseits mit einem Sonnenrad 90, welches drehfest mit dem erstgenannten Planetenträger 78 in Verbindung steht, und andererseits mit einem Ringrad 92, welches drehfest am stationären Endantriebsgehäuse 42 montiert ist. Durch dieses Planetengetriebe 50 wird die von der Verbindungswelle 68 übertragene Drehzahl stark herabgesetzt und das auf das Hinterrad übertragene Drehmoment entsprechend erhöht.

In Fig. 3 ist ein Antriebssystem für die Hinterachse 34 eines landwirtschaftlichen Schleppers dargestellt. Jeder der hybriden Einzelradantriebe für das linke Rad 14 und das rechte Rad 15 entspricht dem anhand der Fig. 2 beschriebenen Antrieb.

Im mittleren Bereich des Achskörpers 38 ist ein Umschaltgetriebe 100 angeordnet, in dessen Getriebegehäuse 102 eine Eingangswelle 104, die mit der in Fig. 1 gezeigten Heckantriebswelle 28 in Verbindung steht, und eine zur Eingangswelle 104 parallele Ausgangswelle 106 mittels Lager 108 drehbar gelagert sind. Die Eingangswelle 104 und die Ausgangswelle 106 tragen je zwei Zahnräder 110, 112, 114, 116 unterschiedlichen Durchmessers. Die Zahnräder 110, 112 der Eingangswelle 104 sind drehfest mit dieser verbunden, während die Zahnräder 114, 116 der Ausgangswelle 106 wahlweise durch Kupplungen 118, 120 drehfest mit dieser verbindbar sind. Gemäß Fig. 3 verbindet die Kupplung 120 das Zahnrad 116 drehfest mit der Ausgangswelle 106, was durch ein Kreuz angedeutet ist. Diese Ausbildung des Umschaltgetriebes 100 ermöglicht eine Umschaltung der übertragenen Drehzahlen und Drehmomente zwischen zwei Drehzahlstufen.

Die Ausgangswelle 106 trägt ferner drehfest ein Kegelrad 122, welches mit zwei Kegelrädern 124, 126 kämmt, die drehbar auf der quer zur Ausgangswelle 106 verlaufenden Eingangswelle 54 der Endantriebe angeordnet sind. Die Kegelräder 124 und 126 lassen sich durch je eine zugehörige Kupplung 128, 130 drehfest mit der Eingangswelle 54 verbinden. Durch Schalten der Kupplungen 128, 130 läßt sich damit die Eingangswelle 54 wahlweise in Vorwärts- oder Rückwärtsrichtung antreiben oder vom mechanischen Antriebsstrang entkoppeln.

Die Ausgangswelle 106 steht ferner mit einer Zapfwellenkupplung 132 in Verbindung, über die wahlweise eine Heckzapfwelle 134 zu- oder abschaltbar ist. Das Umschaltgetriebe 100 kann somit sowohl die mechanischen Drehmomente für die Hybridantriebe der beiden Hinterräder 14, 15 als auch die Leistung für die Heckzapfwelle 134 übertragen.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegenden Ansprüche fallen.

## Patentansprüche

1. Antriebssystem für Nutzfahrzeuge, insbesondere für einen landwirtschaftlichen oder industriellen Schlepper, mit einem durch einen Verbrennungsmotor (16) angetriebenen Generator (18) und mit wenigstens einer Antriebsachse (34), deren Räder (14, 15) jeweils durch einen zugehörigen, durch den Generator (18) gespeisten Elektromotor (44) angetrieben werden, **dadurch gekennzeichnet, daß** der Verbrennungsmotor (16) wenigstens eine mit der Antriebsachse (34) in Verbindung stehende Antriebswelle (28) antreibt und daß jedem Rad (14, 15) der Antriebsachse (34) ein Summengetriebe (46) zugeordnet ist, welches die Ausgangsleistungen der Antriebswelle (28) und des zugehörigen Elektromotors (44) kombiniert und an das Rad (14, 15) abgibt.

2. Antriebssystem nach Anspruch 1, **dadurch gekennzeichnet, daß** wenigstens eine weitere Antriebsachse (36) vorgesehen ist, deren Räder (12) jeweils ausschließlich durch einen durch den Generator (18) gespeisten Elektromotor und gegebenenfalls diesem nachgeordneten Untersetzungsgetriebe angetrieben werden.

3. Antriebssystem für ein zweiachsiges Nutzfahrzeug, **dadurch gekennzeichnet, daß** die Hinterachse (34) mit Hybridantrieben gemäß Anspruch 1 und die gelenkte Vorderachse (36) mit elektrischen Einzelradantrieben gemäß Anspruch 2 versehen sind.

4. Antriebssystem nach einem der Ansprüche 1 bis 3, **dadurch gekennzeichnet, daß** die wenigstens eine hybrid angetriebene Antriebsachse die Antriebsachse eines an das Nutzfahrzeug angehängten Geräts ist.

5. Antriebssystem nach einem der Ansprüche 1 bis 4, **dadurch gekennzeichnet, daß** wenigstens eine Antriebsachse eines an das Nutzfahrzeug angehängten Geräts vorgesehen ist, die mit elektrischen Einzelradantrieben gemäß Anspruch 2 versehen ist.

6. Antriebssystem nach einem der Ansprüche 1 bis 5, **dadurch gekennzeichnet, daß** wenigsten eine Antriebsachse (34, 36) einen Fahrzeugrahmen (10) abstützt, auf dem der Verbrennungsmotor (16) und weitere Antriebskomponenten montiert sind.

7. Antriebssystem nach einem der Ansprüche 1 bis 6, **dadurch gekennzeichnet, daß** zwischen Verbrennungsmotor (16) und Summengetriebe (46) wenigstens ein Umschaltgetriebe (100) angeordnet ist, welches zwischen wenigstens zwei Übertragungsverhältnissen umschaltbar ist.

8. Antriebssystem nach einem der Ansprüche 1 bis 7, **dadurch gekennzeichnet, daß** durch den Verbrennungsmotor (16) eine Frontzapfwelle und/oder eine Heckzapfwelle (134) antreibbar ist.

9. Antriebssystem nach Anspruch 8, **dadurch gekennzeichnet, daß** die Antriebsachse (34) ein zwischen wenigstens zwei unterschiedlichen Übertragungsverhältnissen umschaltbares, durch die Antriebswelle (28) angetriebenes Umschaltgetriebe (100) aufnimmt, dessen Getriebeausgang (106) wahlweise mit den Summengetrieben (46) der Antriebsachse (34) und/oder einer Zapfwelle (134) verbindbar ist.

10. Antriebssystem nach einem der Ansprüche 1 bis 9, **dadurch gekennzeichnet, daß** dem Summengetriebe (46) ein als Planetengetriebe ausgebildetes die Drehzahl untersetzendes Endantriebsgetriebe (50) nachgeordnet ist.

11. Antriebssystem nach einem der Ansprüche 1 bis 10, **dadurch gekennzeichnet, daß** das Summengetriebe (46) ein Planetengetriebe, vorzugsweise ein Ravigneaux-Satz ist.

12. Antriebssystem nach einem der Ansprüche 1 bis 11, **dadurch gekennzeichnet, daß** das Summengetriebe (46) eine Umschaltung zwischen wenigstens zwei Drehzahlübertragungsverhältnissen zuläßt.

13. Antriebssystem nach einem der Ansprüche 1 bis 12, **dadurch gekennzeichnet, daß** die Elektromotoren (44) Asynchronmotoren sind.

14. Antriebssystem nach einem der Ansprüche 1 bis 13, **dadurch gekennzeichnet, daß** wenigstens ein Lenkwinkelsensor zur Erfassung des Lenkwinkels wenigstens eines Rades (12) vorgesehen ist, dessen Signale einer Steuereinrichtung zugeführt werden, welche die Elektromotoren (44) derart ansteuert, daß ein Drehzahlausgleich der durch die Elektromotoren (44) angetriebenen Räder (12, 14, 15) erfolgt.

15. Antriebssystem nach Anspruch 14, **dadurch gekennzeichnet, daß** an jedem Rad (12) der lenkbaren Vorderachse (36) wenigstens ein Lenkwinkelsensor und ein Drehzahlsensor angeordnet ist und daß die Steuereinrichtung vorzugsweise für jedes Rad (12, 14, 15) aus einer Soll- und einer Istdrehzahl und aus einem Soll- und Istlenkwinkel Drehzahlvorgaben für die Elektromotoren (44) berechnet.

## Claims

1. A drive system for a commercial vehicle, especially for an agricultural or industrial tractor, with a generator (18) driven by an internal combustion engine (16) and with at least one drive axle (34) whose wheels (14, 15) are each driven by an associated electric motor (44) supplied by the generator (18), **characterized in that** the internal combustion engine (16) drives at least one drive shaft (28) coupled to the drive axle (34) and **in that** a summing gear (46) is associated with each wheel (14, 15) of the drive axle (34) and combines and delivers to the wheel (14, 15) the output powers of the drive shaft (28) and the associated electric motor (44).

2. A drive system according to claim 1, **characterized in that** at least one further drive axle (36) is provided and its wheels (12) are each driven exclusively by an electric motor fed by the generator (18) and optionally through a following reduction gear.

3. A drive system for a two axle commercial vehicle, **characterized in that** the rear axle is provided with a hybrid drive according to claim 1 and the steered, front axle (36) is provided with electric individual wheel drives according to claim 2.

4. A drive system according to any of claims 1 to 3, **characterized in that** at least one drive axle with hybrid drive is the drive axle of an implement attached to the commercial vehicle.

5. A drive system according to any of claims 1 to 4, **characterized in that** at least one drive axle of an implement attached to the commercial vehicle is provided and is provided with electric individual wheel drives according to claim 2.

6. A drive system according to any of claims 1 to 5, **characterized in that** at least one drive axle (34, 36) supports a vehicle frame (10), on which the internal combustion engine (16) and further drive components are mounted.

7. A drive system according to any of claims 1 to 6, **characterized in that** at least one change-speed gear (100) is arranged between the internal combustion engine (16) and the summing gear (46) and can be shifted between at least two transmission ratios.

8. A drive system according to any of claims 1 to 7, **characterized in that** a front PTO shaft and/or a rear PTO shaft (134) can be driven by the internal combustion engine (16).

9. A drive system according to claim 8, **characterized in that** the drive axle (34) accommodates a change-speed gear (100) which can be shifted between at least two different transmission ratios and is driven by the drive shaft (28), wherein the gear output (106) of the change-speed gear (100) can be coupled selectively to the summing gears (46) of the drive axle (34) and/or a PTO shaft (134).

10. A drive system according to any of claims 1 to 9, **characterized in that** a final drive gear (50) reducing the speed of rotation and formed as a planetary gear follows the summing gear (46).

11. A drive system according to any of claims 1 to 10, **characterized in that** the summing gear (46) is a planetary gear, preferably a Ravigneaux set.

12. A drive system according to any of claims 1 to I I, **characterized in that** the summing gear (46) allows shifting between at least two speed transmission ratios.

13. A drive system according to any of claims 1 to 12, **characterized in that** the electric motors (44) are asynchronous motors.

14. A drive system according to any of claims 1 to 13, **characterized in that** at least one steering angle sensor is provided to detect the steering angle of at least one wheel (12) and its signals are fed to a control device which so controls the electric motors (44) that speed compensation of the wheels (12, 14, 15) driven by the electric motors (44) is effected.

15. A drive system according to claim 14, **characterized in that** at least one steering angle sensor and a speed sensor are associated with each wheel (12) of the steering front axle (36) and **in that** the control device calculates speed commands for the electric motors (44) from set-point and actual speeds of rotation and from set-point and actual steering angles preferably for each wheel (12, 14, 15).

## Revendications

1. Système d'entraînement pour véhicules utilitaires, notamment pour un tracteur agricole ou industriel, comportant un générateur (8) entraîné par un moteur à combustion interne (16), et au moins un essieu moteur (34), dont les roues (14, 15) sont entraînées respectivement par un moteur électrique associé (44) alimenté par le générateur (18), **caractérisé en ce que** le moteur à combustion interne (16) entraîne au moins un arbre d'entraînement (28), qui est relié à l'essieu moteur (34), et qu'à chaque roue (14, 15) de l'essieu moteur (34) est associé un mécanisme additionneur (46), qui combine les puissances de sortie de l'arbre d'entraînement (28) et du moteur électrique associé (44) et les délivre à la roue (14, 15).

2. Système d'entraînement selon la revendication 1, **caractérisé en ce qu'**il est prévu au moins un autre essieu moteur (46), dont les roues (12) sont entraînées respectivement exclusivement par un moteur électrique alimenté par le générateur (18), ou éventuellement par une transmission démultiplicatrice associée à ce moteur.

3. Système d'entraînement pour un véhicule utilitaire à deux essieux, **caractérisé en ce que** l'essieu arrière (34) est équipé de systèmes d'entraînement hybrides selon la revendication 1 et que l'essieu avant orientable (36) est équipé de systèmes d'entraînement électriques de roues individuelles selon la revendication 2.

4. Système d'entraînement selon l'une des revendications 1 à 3, **caractérisé en ce que** le au moins un essieu pour entraîner le système d'entraînement hybride est l'essieu moteur d'un appareil attelé au véhicule utilitaire.

5. Système d'entraînement selon l'une des revendications 1 à 4, **caractérisé en ce qu'**il est prévu au moins un essieu moteur d'un appareil attelé au véhicule utilitaire, qui est pourvu de dispositifs d'entraînement électrique selon la revendication 2.

6. Système d'entraînement selon l'une des revendications 1 à 5, **caractérisé en ce qu'**au moins un essieu moteur (34, 36) supporte un châssis de véhicule (10), sur lequel sont montés le moteur à combustion interne (16) et d'autres composants d'entraînement.

7. Système d'entraînement selon l'une des revendications 1 à 6, **caractérisé en ce qu'**entre le moteur à combustion interne (16) et le mécanisme additionneur (46) est disposé au moins un mécanisme de commutation (100), qui peut être commuté entre au moins deux rapports de transmission.

8. Système d'entraînement selon l'une des revendications 1 à 7, **caractérisé en ce qu'**un arbre de prise directe avant et/ou un arbre de prise directe arrière (134) sont entraînés par le moteur à combustion interne (16).

9. Système d'entraînement selon la revendication 8, **caractérisé en ce que** l'essieu moteur (34) loge un mécanisme de commutation (100), qui peut être commuté entre au moins deux rapports de transmission différents et est entraîné par l'arbre d'entraînement (28) et dont la sortie (106) peut être reliée au choix aux mécanismes additionneurs (46) de l'essieu moteur (34) et/ou d'un arbre de prise directe (44).

10. Système d'entraînement selon l'une des revendications 1 à 9, **caractérisé en ce qu'**en aval du mécanisme additionneur (46) est monté un mécanisme d'entraînement final (50) qui est agencé sous la forme d'un engrenage planétaire et réalise une réduction de la vitesse de rotation.

11. Système d'entraînement selon l'une des revendications 1 à 10, **caractérisé en ce que** le mécanisme additionneur (46) est un engrenage planétaire, de préférence un ensemble Ravigneaux.

12. Système d'entraînement selon l'une des revendications 1 à 11, **caractérisé en ce que** le mécanisme additionneur (46) permet une commutation entre au moins deux rapports de transmission de vitesse de rotation.

13. Système d'entraînement selon l'une des revendications 1 à 12, **caractérisé en ce que** les moteurs électriques (44) sont des moteur asynchrones.

14. Système d'entraînement selon l'une des revendications 1 à 13, **caractérisé en ce qu'**au moins un capteur de l'angle de braquage est prévu pour détecter l'angle de braquage d'au moins une roue (12), et que ses signaux sont envoyés à un dispositif de commande qui commande les moteurs électriques (44) de manière à réaliser une compensation des vitesses de rotation des roues (12, 14, 16) entraînées par les moteurs électriques (44).

15. Système d'entraînement selon la revendication 14, **caractérisé en ce qu'**au moins un capteur de l'angle de braquage et un capteur de la vitesse de rotation sont disposés à côté de chaque roue (12) de l'essieu avant orientable (36) et que le dispositif de commande calcule, de préférence pour chaque roue (12, 14, 15) des prédéterminations de vitesse de rotation pour les moteurs électriques (44) à partir d'une vitesse de rotation de consigne et d'une vitesse de commande rotation réelle et à partir d'un angle de braquage de consigne et d'un angle de braquage réel.
